# EUROPEAN PATENT APPLICATION

(11) **EP 4 765 942 A1**
(43) Date of publication of application: **24.06.2026**
(21) Application number: 23949315.8
(22) Date of filing: 18.08.2023
(51) Int. Cl.: H04W 28/16

(54) **M-AP COORDINATION METHOD, ACCESS POINT DEVICE, AND COMMUNICATION SYSTEM**

(71) Applicant: Beijing Xiaomi Mobile Software Co., Ltd., Beijing 100085 (CN)
(72) Inventor: CHENG, Yajun, Beijing 100085 (CN)
(74) Representative: Dehns Germany Partnerschaft mbB
(86) International application number: PCT/CN2023/113833
(87) International publication number: WO 2025/039121

(57) **Abstract**

Embodiments of the present disclosure relates to a M-AP coordination method, an access point device, and a communication system, applied to the technical field of communications. The M-AP coordination method comprises: a first access point (AP) device determining a first radio frame, wherein the first radio frame comprises first identification information, and the first identification information identifies that the first AP initiates M-AP coordination to a target AP in a M-AP coordination group suitable for M-AP coordination; and transmitting the first radio frame. Therefore, a third AP receiving the first radio frame can determine, depending on whether the third AP belongs to the M-AP coordination group or not, whether to subsequently participate in M-AP coordination initiated by the first AP or not, thereby implementing efficient coordinated scheduling among multiple APs, achieving sharing of frequency domain resources, time domain resources, spatial domain resources and other resource among multiple APs, achieving reasonable configuration of communication resources, and further improving system performance.

## Description

### TECHNICAL FIELD

The present disclosure relates to the field of communication technology, and in particular to a multi-AP coordination method, an access point, and a communication system.

### BACKGROUND

Currently, research in Wi-Fi technology focuses on areas such as Ultra High Reliability (UHR), with the vision of improving the reliability of Wireless Local Area Networks (WLAN) connections, reducing latency, enhancing manageability, increasing throughput at different signal-to-noise ratio (SNR) levels, reducing device-level power consumption, etc.

In UHR, multi-AP (M-AP, or multi_AP) coordination mechanisms will be further enhanced to ensure the latency requirements of low-latency services.

### SUMMARY

The embodiments of the present disclosure provide a M-AP coordination method, an access point, and a communication system to further enhance the M-AP coordination mechanism.

According to one aspect, the embodiments of the present disclosure provide a multi-AP coordination method, including:
determining, by a first access point AP, a first frame; where the first frame includes first indication information, and the first indication information indicates that the first AP initiates a multi-AP coordination with a target AP in a multi-AP coordination group to which the multi-AP coordination is applicable; and
transmitting the first frame.

According to another aspect, the embodiments of the present disclosure provide a multi-AP coordination method, including:
receiving, by a third access point AP, a first frame; where the first frame includes first indication information, and the first indication information indicates that the first AP initiates a multi-AP coordination to a target AP in a multi-AP coordination group to which the multi-AP coordination is applicable.

According to another aspect, the embodiments of the present disclosure provide an access point, where the access point AP is a first AP, and the first AP includes:
a determining module, configured to determine a first frame; the first frame includes first indication information, the first indication information indicates that the first AP initiates a multi-AP coordination with a target AP in a multi-AP coordination group to which the multi-AP coordination is applicable; and
a transmitting module, configured to transmit the first frame.

According to another aspect, the embodiments of the present disclosure provide an access point, wherein the access point AP is a third AP, and the third AP includes:
a receiving module, configured to receive a first frame; the first frame includes first indication information, the first indication information indicates that the first AP initiates a multi-AP coordination with a target AP in a multi-AP coordination group to which the multi-AP coordination is applicable.

According to another aspect, the embodiments of the present disclosure provide an access point, wherein the access point AP is a first AP, and the first AP includes:
one or more processors;
wherein the first AP is configured to perform the multi-AP coordination method according to the embodiments of the present disclosure.

According to another aspect, the embodiments of the present disclosure provide an access point, wherein the access point AP is a third AP, and the third AP includes:
one or more processors;
wherein the third AP is configured to perform the multi-AP coordination method according to the embodiments of the present disclosure.

The embodiments of the present disclosure also provide a communication system, including a first AP and a third AP; where the first AP and the third AP are configured to perform the multi-AP coordination method according to the embodiments of the present disclosure respectively.

The embodiments of the present disclosure also provide a storage medium. The storage medium stores instructions. When the instructions are executed on a communication device, the communication device is configured to perform the multi-AP coordination method according to any of the embodiments of the present disclosure.

In the embodiments of the present disclosure, a first frame carries first indication information. The first indication information indicates that a first AP initiates multi-AP coordination with a target AP in the multi-AP coordination group to which the multi-AP coordination is applicable. The first AP determines and transmits the first frame. Thus, a third AP receiving the first frame can determine whether to participate in the multi-AP coordination initiated by the first AP based on whether the third AP belongs to the multi-AP coordination group. This achieves efficient coordination and scheduling among multiple APs, thereby enabling resource sharing in the frequency domain, time domain, spatial domain, etc. among multiple APs, achieving reasonable allocation of communication resources, and further improving system performance.

Additional aspects and advantages of the embodiments of the present disclosure will be set forth in part in the description which follows, and will be obvious from the description, or may be learned by practice of the present disclosure.

### BRIEF DESCRIPTION OF THE DRAWINGS

To more clearly illustrate the technical solutions in the embodiments of the present disclosure, the accompanying drawings required for describing the embodiments are introduced below. These drawings are merely some embodiments of the present disclosure and do not impose specific limitations on the scope of protection of the present disclosure.
FIG. 1 is an example schematic diagram of an architecture of a communication system provided according to an embodiment of the present disclosure;
FIG. 2 is an example interactive schematic diagram of a method provided according to an embodiment of the present disclosure;
FIG. 3 is a flowchart of a multi-AP coordination method provided according to an embodiment of the present disclosure;
FIG. 4 is another flowchart of a multi-AP coordination method provided according to an embodiment of the present disclosure;
FIG. 5 is a structural schematic diagram of a first AP proposed in an embodiment of the present disclosure;
FIG. 6 is a structural schematic diagram of a third AP proposed in an embodiment of the present disclosure;
FIG. 7 is a structural schematic diagram of a terminal proposed in an embodiment of the present disclosure;
FIG. 8 is a structural schematic diagram of a chip proposed in an embodiment of the present disclosure.

### DETAILED DESCRIPTION

The embodiments of the present disclosure provide a multi-AP (Access Point) coordination method, an access point, and a communication system.

In a first aspect, the embodiments of the present disclosure provide a multi-AP coordination method, the method including:
determining, by a first access point (AP), a first frame; where the first frame includes first indication information, and the first indication information indicates that the first AP initiates multi-AP coordination with a target AP in a multi-AP coordination group to which the multi-AP coordination is applicable; and
transmitting the first frame.

In the above embodiment, the first frame carries the first indication information. The first indication information indicates that the first AP initiates multi-AP coordination with the target AP in the multi-AP coordination group to which the multi-AP coordination is applicable. The first AP determines and transmits the first frame. Thus, a third AP receiving the first frame can determine whether to participate in the multi-AP coordination initiated by the first AP based on whether the third AP belongs to the multi-AP coordination group. This achieves efficient coordination and scheduling among multiple APs, thereby enabling resource sharing in the frequency domain, time domain, spatial domain, etc. among multiple APs, achieving reasonable allocation of communication resources, and further improving system performance.

In conjunction with some embodiments of the first aspect, in some embodiments, the first indication information includes a first subfield and/or a second subfield;
where the first subfield indicates the trigger type of the first frame; the first subfield is set to a first parameter value, indicating the first frame as a multi-AP coordination triggering frame;
the second subfield indicates a second AP included in the multi-AP coordination group; the indication bit corresponding to the second AP is set to a second parameter value, indicating the second AP as the target AP.

In the above embodiments, the trigger type of the first frame can be determined by parsing the first subfield, and the target AP in the multi-AP coordination group can be obtained by parsing the second subfield.

In conjunction with some embodiments of the first aspect, in some embodiments, the first frame further includes second indication information, which indicates multi-AP coordination information.

In the above embodiments, the multi-AP coordination information is indicated by the second indication information; thus, the third AP receiving the first frame can obtain the multi-AP coordination information initiated by the first AP.

In conjunction with some embodiments of the first aspect, in some embodiments, the second indication information includes at least one of a third subfield, a fourth subfield, and a fifth subfield;
where the third subfield indicates the indication information of the target AP; the indication information of the target AP includes at least one of the Media Access Control Address (MAC address) of the target AP, the MAC address of the Access Point Multi-Link Device (AP MLD) to which the target AP belongs, and the Basic Service Set color (BSS color);
the fourth subfield includes a first indication bit and/or a second indication bit;
the first indication bit indicates whether a transmission start time exists;
the second indication bit indicates whether a first transmission duration is a common transmission duration; the first transmission duration is a transmission duration allocated by the first AP to the target AP based on the obtained Transmission Opportunity (TXOP); the common transmission duration indicates that the first transmission duration is the same as a second transmission duration; the second transmission duration is a transmission duration allocated by the first AP to other APs based on the TXOP;
the fifth subfield indicates the first transmission duration.

In the above embodiments, the third subfield indicates the indication information of the target AP; the fourth subfield indicates whether the first transmission duration allocated by the first AP to the target AP based on the obtained TXOP is a common transmission duration, and whether the first AP has allocated a transmission start time to the target AP based on the obtained TXOP; the fifth subfield indicates the first transmission duration allocated by the first AP to the target AP based on the obtained TXOP. Thus, the third AP receiving the first frame can obtain specific multi-AP coordination information.

In conjunction with some embodiments of the first aspect, in some embodiments, the first indication bit is set to a third parameter value. The third parameter value indicates the existence of the transmission start time. The second indication information further includes a sixth subfield; where the sixth subfield indicates the transmission start time.

The first indication bit is set to a fourth parameter value. The fourth parameter value indicates the absence of the transmission start time.

In the above embodiments, whether a transmission start time exists can be determined based on the value of the first indication bit. Furthermore, if the first indication bit indicates that no transmission start time exists, the sixth subfield does not need to be parsed, improving transmission efficiency. If the first indication bit indicates that a transmission start time exists, multi-AP coordinated transmission can be performed with the first AP based on that transmission start time.

In conjunction with some embodiments of the first aspect, in some embodiments, in a case where the first indication bit is set to the third parameter value, the first AP and the target AP perform multi-AP coordinated transmission operations during a period from the transmission start time to the end of the first transmission duration.

In a case where the first indication bit is set to the fourth parameter value, the first AP and the target AP perform multi-AP coordinated transmission operations during a period from time after a short interframe space (SFIS) to the end of the first transmission duration.

In the above embodiments, by having the first AP and the target AP perform multi-AP coordinated transmission operations during a period from the transmission start time to the end of the first transmission duration in a case where the first indication bit indicates that a transmission start time exists, multi-AP coordinated transmission operations can be performed based on the transmission start time and transmission duration allocated by the first AP to the target AP.

In a case where the first indication bit indicates the absence of the transmission start time, beginning after a short interframe space (SFIS) until the end of the first transmission duration, the first AP and the target AP perform multi-AP coordinated transmission operations. This separates frames belonging to a single session, effectively avoiding contention collision and transmission interference.

In conjunction with some embodiments of the first aspect, in some embodiments, the second indication bit is set to a fifth parameter value. The second indication bit indicates that the first transmission duration is the common transmission duration. The second indication information further includes a seventh sub-field; where the seventh sub-field indicates the spectrum parameter of the multi-AP coordinated transmission operations performed by the first AP with the target AP.

In the above embodiments, by setting the spectrum parameter for multi-AP coordinated transmission operations performed by the first AP with the target AP in a case where the first transmission duration corresponding to the target AP is a shared transmission duration, multiple APs (i.e., the target AP and other APs) that have obtained the same transmission opportunity can transmit within the corresponding time slot (i.e., the first transmission duration or the shared transmission duration) through strategies such as spectrum sharing (i.e., the spectrum parameter corresponding to each AP), achieving mixed transmission of multiple coordination strategies, improving the utilization efficiency of spectrum resources and fairness among APs.

In conjunction with some embodiments of the first aspect, in some embodiments, in a case where the second indication bit is set to the fifth parameter value, the first AP performs multi-AP coordinated transmission operations with the target AP according to the spectrum parameter.

In the above embodiments, by performing multi-AP coordinated transmission operations with the first AP according to the spectrum parameter for performing the multi-AP coordinated transmission operations allocated by the first AP for the target AP in a case where the first transmission duration is a shared transmission duration, conflicts can be avoided in the transmission process between other APs that also have received transmission opportunities which are the shared transmission durations and the first AP in the transmission process between the target AP and the first AP1.

In conjunction with some embodiments of the first aspect, in some embodiments, the indication information of the third AP receiving the first frame matches the indication information of the target AP. During the period from the transmission start time to the end of the first transmission duration, the first AP performs multi-AP coordinated transmission operations with the third AP.

In the above embodiments, in a case where the indication information of the third AP matches the indication information of the target AP in the first frame, the first AP performs multi-AP coordinated transmission operations with the third AP during the period from the transmission start time to the end of the first transmission duration; in a case where the indication information of the third AP receiving the first frame does not match the indication information of the target AP, the first AP does not perform multi-AP coordinated transmission operations with the third AP. That is, the AP that obtains a transmission opportunity transmits within the corresponding time (i.e., from the transmission start time to the end of the first transmission duration), and the AP that does not obtain a transmission opportunity does not compete for access or transmit during this time, effectively avoiding contention and transmission interference.

In conjunction with some embodiments of the first aspect, in some embodiments, the first frame further includes third indication information, the third indication information indicates the receiving address of the first frame as a multicast address, and the multicast address includes the MAC address of the target AP.

In the above embodiments, by setting the receiving address of the first frame as a multicast address, where the multicast address is the MAC address of the target AP, the first AP can receive frames sent by the target AP with the intention of joining multi-AP coordination scheduling via this multicast address. This improves the multi-AP coordination scheduling rate, increases subsequent data transmission rate, and reduces transmission latency.

In a second aspect, embodiments of the present disclosure provide a multi-AP coordination method, the method including:
determining, by a third access point (AP), a first frame; where the first frame includes first indication information, and the first indication information indicates that the first AP initiates multi-AP coordination with a target AP in the multi-AP coordination group to which multi-AP coordination is applicable.

In the above embodiments, the first frame carries the first indication information, and the first indication information indicates that the first AP initiates multi-AP coordination with a target AP in the multi-AP coordination group to which multi-AP coordination is applicable. Thus, the third AP receiving the first frame can determine whether to participate in the multi-AP coordination initiated by the first AP based on whether the third AP belongs to the multi-AP coordination group, achieving efficient coordination scheduling among multiple APs, thereby realizing resource sharing in the frequency domain, time domain, spatial domain, etc. among multiple APs, achieving reasonable allocation of communication resources, and further improving system performance.

In conjunction with some embodiments of the second aspect, in some embodiments, the first indication information includes a first subfield and/or a second subfield;
where the first subfield indicates the trigger type of the first frame; the first subfield is set to a first parameter value, indicating the first frame as a multi-AP coordination trigger frame;
the second subfield indicates a second AP included in the multi-AP coordination group; the indication bit corresponding to the second AP is set to a second parameter value, indicating the second AP as the target AP.

In conjunction with some embodiments of the second aspect, in some embodiments, the first frame further includes second indication information, and the second indication information indicates multi-AP coordination information.

In conjunction with some embodiments of the second aspect, in some embodiments, the second indication information includes at least one of a third subfield, a fourth subfield, and a fifth subfield;
where the third subfield indicates the indication information of the target AP; the indication information of the target AP includes at least one of Media Access Control Address (MAC address) of the target AP, MAC address of the Access Point Multi-Link Device (AP MLD) to which the target AP belongs, and the Basic Service Set color (BSS color);
the fourth subfield includes a first indication bit and/or a second indication bit;
the first indication bit indicates whether a transmission start time exists;
the second indication bit indicates whether the first transmission duration is a shared transmission duration; the first transmission duration is the transmission duration allocated by the first AP to the target AP based on the obtained Transmission Opportunity (TXOP); the shared transmission duration indicates that the first transmission duration is the same as a second transmission duration; the second transmission duration is a transmission duration allocated by the first AP to other APs based on the TXOP;
the fifth subfield indicates the first transmission duration.

In conjunction with some embodiments of the second aspect, in some embodiments, the first indication bit is set to a third parameter value. The first indication bit indicates the existence of the transmission start time. The second indication information further includes a sixth subfield; where the sixth subfield indicates the transmission start time;
the first indication bit is set to a fourth parameter value, and the first indication bit indicates the absence of the transmission start time.

In conjunction with some embodiments of the second aspect, in some embodiments, in a case where the first indication bit is set to the third parameter value, during a period from the transmission start time to the end of the first transmission duration, the first AP performs multi-AP coordinated transmission operations with the target AP;
in a case where the first indication bit is set to the fourth parameter value, during a period from time after one short interframe space (SFIS) after the target AP receives the first frame and responds (e.g., by replying with a CTS frame) to the end of the first transmission duration, the first AP performs multi-AP coordinated transmission operations with the target AP.

In conjunction with some embodiments of the second aspect, in some embodiments, the second indication bit is set to the fifth parameter value, the second indication bit indicates the first transmission duration as the shared transmission duration, and the second indication information further includes a seventh subfield; where the seventh subfield indicates the spectrum parameter of the first AP performing multi-AP coordinated transmission operation with the target AP.

In conjunction with some embodiments of the second aspect, in some embodiments, in a case where the second indication bit is set to the fifth parameter value, the first AP performs a multi-AP coordinated transmission operation with the target AP based on the spectrum parameter.

In conjunction with some embodiments of the second aspect, in some embodiments, the indication information of the third AP matches the indication information of the target AP, and the third AP performs a multi-AP coordinated transmission operation with the first AP during a period from the transmission start time to the end of the first transmission duration.

In conjunction with some embodiments of the second aspect, in some embodiments, the first frame further includes third indication information, the third indication information indicates the receiving address of the first frame as a multicast address, and the multicast address includes the MAC address of the target AP.

In a third aspect, embodiments of the present disclosure also provide an access point. The access point is a first AP, and the first AP includes at least one of a determining module and a transmitting module; where the first AP is configured to execute an optional implementation of the first aspect.

In a fourth aspect, embodiments of the present disclosure also provide an access point. The access point is a third AP. The third AP includes a first receiving module; where the third AP is configured to execute an optional implementation of the second aspect.

In a fifth aspect, embodiments of the present disclosure also provide an access point. The access point is a first AP, including:
one or more processors;
wherein the first AP is configured to execute an optional implementation of the first aspect.

In a sixth aspect, embodiments of the present disclosure also provide an access point. The access point is a third AP, including:
one or more processors;
wherein the third AP is configured to execute an optional implementation of the second aspect.

In a seventh aspect, embodiments of the present disclosure also provide a communication system, including a first AP and a third AP; where the first AP is configured to execute the optional implementation as described in the first aspect, and the third AP is configured to execute the optional implementation as described in the second aspect.

In an eighth aspect, embodiments of the present disclosure also provide a storage medium storing instructions that, when executed on a communication device, cause the communication device to execute the optional implementations as described in the first, second, and third aspects.

In a ninth aspect, embodiments of the present disclosure provide a program product that, when executed by a communication device, causes the communication device to execute the method described in the optional implementations of the first, second, and third aspects.

In a tenth aspect, embodiments of the present disclosure provide a computer program that, when run on a computer, causes the computer to perform the methods described in the optional implementations of the first, second, and third aspects.

In an eleventh aspect, embodiments of the present disclosure provide a chip or chip system. The chip or chip system includes processing circuitry configured to perform the methods described in the optional implementations of the first, second, and third aspects.

It is understood that the first AP, the third AP, the communication system, the storage medium, the program product, the computer program, the chip, or the chip system described above are all configured to perform the methods proposed in the embodiments of the present disclosure. Therefore, the beneficial effects that can be achieved can be referred to the beneficial effects in the corresponding methods, and will not be repeated here.

Embodiments of the present disclosure provide a multi-AP coordination method, an access point, and a communication system. In some embodiments, the terms such as multi-AP coordination method, signal transmission method, frame transmission method, etc. can be used interchangeably, as can the terms such as information processing system, communication system, etc.

The embodiments of the present disclosure are not exhaustive, but merely illustrative of some embodiments, and are not intended to limit the scope of protection of the present disclosure. Unless otherwise specified, each step in a particular embodiment can be implemented as an independent embodiment, and the steps can be arbitrarily combined. For example, a solution after removing some steps in a particular embodiment can also be implemented as an independent embodiment, and the order of the steps in a particular embodiment can be arbitrarily interchanged. Furthermore, the optional implementation methods in a particular embodiment can be arbitrarily combined; moreover, the embodiments can be arbitrarily combined with each other. For example, some or all steps of different embodiments can be arbitrarily combined, and a particular embodiment can be arbitrarily combined with optional implementation methods of other embodiments.

In embodiments of the present disclosure, unless otherwise specified or there is a logical conflict, the terminology and/or descriptions between the embodiments are consistent and can be mutually referenced. Technical features in different embodiments can be combined to form new embodiments according to their inherent logical relationships.

The terminology used in the embodiments of the present disclosure is only for the purpose of describing specific embodiments and is not intended to limit the disclosure.

In the embodiments of the present disclosure, "multiple" refers to two or more.

In some embodiments, the terms such as "at least one of", "one or more", "a plurality of", "multiple", etc. can be used interchangeably.

In some embodiments, the notation such as "at least one of A and B", "A and/or B", "A in one case, B in another", "in response to one case A, in response to another case B", etc., may include the following technical solutions depending on the situation: in some embodiments, A (executed regardless of B); in some embodiments, B (executed regardless of A); in some embodiments, execution is selected from A and B (A and B are selectively executed); in some embodiments, both A and B are executed. The same applies when there are more branches such as A, B, C, etc.

In some embodiments, the notation such as "A or B", etc., may include the following technical solutions depending on the situation: in some embodiments, A (executed regardless of B); in some embodiments, B (executed regardless of A); in some embodiments, execution is selected from A and B (A and B are selectively executed). The same applies when there are more branches such as A, B, C, etc.

The prefixes such as "first", "second", etc., in the embodiments of the present disclosure are merely for distinguishing different descriptive objects and do not constitute limitations on the position, order, priority, number, or content of the descriptive objects. The description of the descriptive objects should be referred to in the claims or the context of the embodiments, and the use of prefixes should not constitute unnecessary limitations. For example, if the descriptive object is "field", then the ordinal numbers preceding "field" in "first field" and "second field" do not restrict the position or order of the "fields". "First" and "second" do not restrict whether the "fields" they modify are in the same message, nor do they restrict the order of "first field" and "second field". Similarly, if the descriptive object is "level", then the ordinal numbers preceding "level" in "first level" and "second level" do not restrict the priority between "levels". Furthermore, the number of descriptive objects is not limited by ordinal numbers; there can be one or more. For example, in "first device," the number of "devices" can be one or more. In addition, objects modified by different prefixes can be the same or different. For example, if the descriptive object is "device", then "first device" and "second device" can be the same device or different devices, and their types can be the same or different. Similarly, if the descriptive object is "information", then "first information" and "second information" can be the same information or different information, and their content can be the same or different.

In some embodiments, "including A", "containing A", "for indicating A" and "carrying A" can be interpreted as directly carrying A or indirectly indicating A.

In some embodiments, terms such as "in response to...", "in response to determining...", "in the case of...", "when...", "if...", etc., can be used interchangeably.

In some embodiments, terms such as "greater than", "greater than or equal to", "not less than", "more than", "more than or equal to", "not less than", "higher than", "higher than or equal to", "not lower than", and "above" can be used interchangeably. Terms such as "less than", "less than or equal to", "not greater than", "less than", "less than or equal to", "not more than", "lower than", "lower than or equal to", "not higher than", and "below" can be used interchangeably.

In some embodiments, apparatus and devices can be interpreted as physical or virtual, and their names are not limited to those described in the embodiments. In some cases, they can also be understood as "equipment", "device", "circuit", "network element", "node", "function", "unit", "section", "system", "network", "chip", "chip system", "entity", "body", etc. In some embodiments, "network" can be interpreted as devices included in the network, such as an access network device, a core network device, etc.

In some embodiments, the acquisition of data, information, etc., may comply with the laws and regulations of the country where the location is situated.

In some embodiments, data, information, etc., may be acquired after obtaining user consent.

Furthermore, each element, each row, or each column in the tables of the present disclosure can be implemented as an independent embodiment, and any combination of any element, any row, or any column can also be implemented as an independent embodiment.

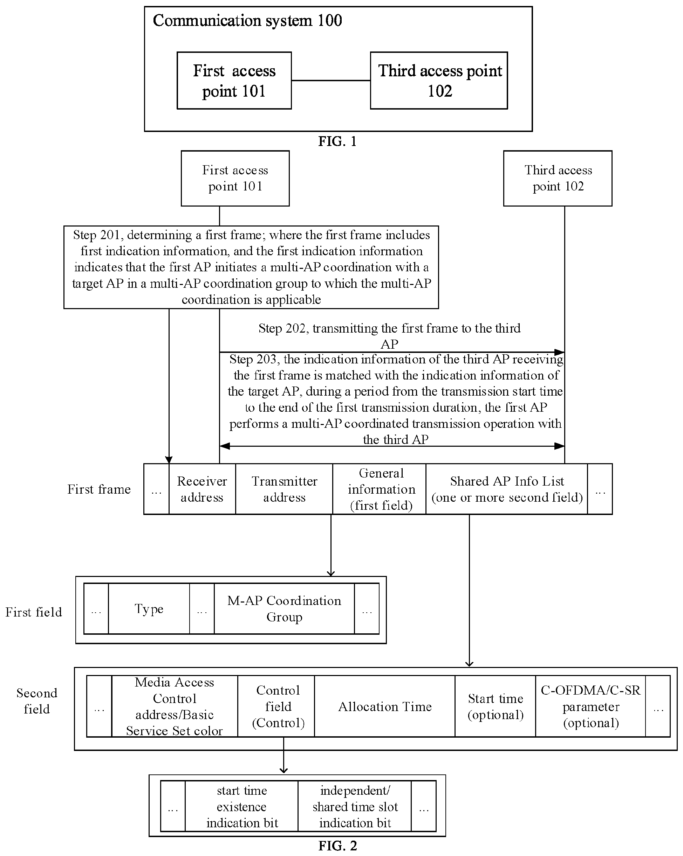

FIG. 1 is a schematic diagram of an architecture of a communication system according to an embodiment of the present disclosure.

As shown in FIG. 1, the communication system 100 includes a first AP (Access Point, AP) 101 and a third AP 102.

In some embodiments, the third AP 102 may include a second AP in a multi-AP coordination group to which multi-AP coordination is applicable, or it may be an AP outside the multi-AP coordination group. The second AP may include a shared AP (i.e., a target AP) coordinated and scheduled by the first AP 101.

In some embodiments, both the first AP 101 and the third AP 102 can be access points for a mobile terminal to access a wired network. An AP acts as a bridge connecting wired and wireless networks. Its main function is to connect various wireless network clients together and then connect the wireless network to the Ethernet. Specifically, an AP can be a terminal device or network device with a Wi-Fi chip. In some embodiments, the AP can support various WLAN standards such as 802.11ax, 802.11be, 802.11 ac, 802.11n, 802.11g, 802.11b, 802.11 bn, 802.11bf, 802.11a, etc., as well as the next-generation 802.11 protocol, but is not limited thereto.

For example, in an embodiment of the present disclosure, the AP can be a device that supports multi-link. For example, it can be represented as an Access Point Multi-Link Device (AP MLD); AP MLD can represent an access point that supports multi-link communication function.

It is understood that the communication system described in the embodiments of the present disclosure is for the purpose of more clearly illustrating the technical solutions of the embodiments of the present disclosure and does not constitute a limitation on the technical solutions proposed in the embodiments of the present disclosure. Those skilled in the art will recognize that, with the evolution of system architecture and the emergence of new business scenarios, the technical solutions proposed in the embodiments of the present disclosure are also applicable to similar technical problems.

The following embodiments of the present disclosure can be applied to the communication system 100 shown in FIG. 1, or to some of its components, but are not limited thereto. The components shown in FIG. 1 are illustrative; the communication system may include all or some of the components in FIG. 1, or other components outside of FIG. 1. The number and form of each component are arbitrary; each component can be physical or virtual. The connection relationship between the components is illustrative; components may be unconnected or connected, and the connection can be in any manner, including direct or indirect connections, wired or wireless connections.

The embodiments of the present disclosure can be applied to Wireless Local Area Networks (WLANs), such as WLANs using the 802.11 series of protocols. In a WLAN, the Basic Service Set (BSS) is a fundamental component of the WLAN. A BSS network consists of station devices which share a certain association within a specific coverage area. One type of the association involves the stations communicating directly with each other within a self-organizing network; this is called an Independent Basic Service Set (IBSS). A more common scenario is that the BSS network has only one central station dedicated to managing the BSS, called the Access Point (AP). Other sites within the BSS network that are not APs are called terminals, also known as non-AP STAs. APs and non-AP STAs are collectively referred to as STAs. When describing STAs, there is no need to distinguish between APs and non-AP STAs. Within the same BSS network, due to distance, transmission power, and other factors, a STA cannot detect other STAs that are far away; they are each other's hidden nodes.

FIG. 2 is an interactive schematic diagram of a multi-AP coordination method according to an embodiment of the present disclosure. As shown in FIG. 2, the method includes:
Step 201, a first AP 101 determines a first frame; where the first frame includes first indication information, and the first indication information indicates that the first AP 101 initiates multi-AP coordination with a target AP in the multi-AP coordination group to which the multi-AP coordination is applicable.

In existing 802.11 protocols, the main focus is on how to improve the throughput, rate, and access efficiency of a single BSS or a single AP, with limited research on collaborative transmission between multiple BSSs or multiple APs. With the increasing frequency bands and frequencies supported by Wi-Fi devices, and the diversification of communication service requirements, WLAN device deployments are becoming increasingly dense. Consequently, increasingly dense APs may lead to more inter-cell interference and increase the risk of access conflicts.

To further improve user service quality and overall network performance, in UHR, while pursuing improvements in communication rate, communication latency, and reliability within a single BSS, attention is also paid to coordination between multiple access points (Multiple APs, M-APs). Through collaboration among M-APs, more rational allocation of communication resources can be achieved, ensuring communication quality while improving access efficiency and resulting in superior network performance.

The basic idea of M-AP Coordination Operation (M-APCO) is that an AP with coordination capability can coordinate with a neighboring AP that supports M-AP coordination through a cooperative transmission mode. This enables time-frequency resource sharing, spatial multiplexing, or joint transmission, thereby reducing inter-cell interference, ensuring Quality of Service (QoS), improving communication speed, and reducing latency.

An AP that obtains the TXOP and initiates M-AP coordination is called the Sharing AP, and an AP participating in the M-AP coordination initiated by the Sharing AP is called a Shared AP. The Sharing AP and the Shared AP can achieve resource sharing in the frequency, time, spatial domains, etc. among multiple APs, achieving rational allocation of communication resources and further improving system performance based on the established M-AP coordination schedule.

However, how to achieve efficient cooperative transmission among multiple APs is currently unclear. On the one hand, when a Sharing AP obtains a TXOP and initiates M-AP coordination to allocate a part of the transmission opportunity to a specific AP, due to the anonymity between multiple APs, if an AP that has not obtained a transmission opportunity mistakenly believes the channel is idle and transmits data with the Sharing AP within the time corresponding to that part of the transmission opportunity, it may lead to transmission conflicts or interfere with transmissions within other BSSs.

In some embodiments, both the first AP 101 and the third AP 102 support M-AP coordination. Both the first AP 101 and the third AP 102 can be either sharing APs or being shared APs. In the embodiment of the present disclosure, the example of the first AP 101 as the sharing AP and the third AP 102 as the shared AP is used for illustration.

In some embodiments, the first AP 101 can determine the first frame after obtaining the TXOP. Alternatively, it can determine the first frame after initiating the first frame. The embodiments of the present disclosure do not impose any limitations on this.

In the embodiments of the present disclosure, the first AP 101 determines a first frame. The first frame carries first indication information, and the first indication information indicates that the first AP 101 initiates multi-AP coordination with a target AP in a multi-AP coordination group to which the multi-AP coordination is applicable. Thus, by pre-determining the multi-AP coordination group to which the multi-AP coordination is applicable and initiating multi-AP coordination with a target AP within that group using the first frame determined by the first AP 101, coordination and scheduling among multiple APs can be efficiently initiated.

Step 202: The first AP 101 transmits the first frame to the third AP 102.

In the embodiment of the present disclosure, the first frame carries first indication information, and the first indication information indicates that the first AP 101 initiates multi-AP coordination with a target AP in the multi-AP coordination group to which multi-AP coordination is applicable. The first AP 101 determines and transmits the first frame to the third AP 102. Thus, the third AP 102, upon receiving the first frame, can determine whether to participate in the multi-AP coordination initiated by the first AP 101 based on whether it belongs to the multi-AP coordination group. This achieves efficient coordination and scheduling among multiple APs, thereby enabling resource sharing in the frequency, time, spatial domains, etc. among multiple APs, achieving reasonable allocation of communication resources, and further improving system performance.

In some embodiments, the first indication information includes a first subfield and/or a second subfield.

The first subfield indicates the trigger type of the first frame; the first subfield is set to a first parameter value, indicating the first frame as a multi-AP coordination trigger frame.

The second subfield indicates the second AP included in the multi-AP coordination group (M-AP Coordination Group/Set); the indication bit corresponding to the second AP is set to a second parameter value, indicating the second AP as the target AP.

In some embodiments, the first indication information can be carried in a first field of the first frame. The first field can be a general information field, including a first subfield and/or a second subfield.

In some embodiments, the first subfield can be a trigger type subfield, configured to indicate the trigger type of the first frame. When the first subfield is set to a first parameter value (e.g., the first parameter value can be "1"), the first frame is indicated as a multi-AP coordination trigger frame. In a case where the first frame is determined after the first AP obtains the TXOP, the multi-AP coordination trigger frame can also be called a multi-AP TXOP shared trigger frame.

In some embodiments, the second subfield can be represented by a bitmap of different bytes. The size of the bitmap corresponding to the second subfield can be determined according to the number of second APs in the multi-AP coordination group. For example, the second subfield can be an 8-byte bitmap, with each byte corresponding to 8 bits, and each bit corresponding to a BSS color value of a second AP, for a total of 64 BSS colors. The lowest bit corresponds to a BSS color value of 0, and the highest bit corresponds to a BSS color value of 63. If a bit is set to 1, it indicates that the second AP with the corresponding BSS color value is the target AP.

In the embodiment of the present disclosure, the trigger type of the first frame can be determined by parsing the first subfield, and the target AP in the multi-AP coordination group can be obtained by parsing the second subfield.

In some embodiments, the first frame further includes second indication information, and the second indication information indicates the multi-AP coordination information.

In some embodiments, the multi-AP coordination information may include, but is not limited to, the indication information of the target AP, the transmission duration allocated by the first AP 102 to the target AP, the transmission start time allocated by the first AP 102 to the target AP, and the spectrum parameter allocated by the first AP 102 to the target AP. The spectrum parameter may include, but is not limited to, a parameter related to technologies such as Coordinated Orthogonal Frequency Division Multiple Access (C-OFDMA), Coordinated Spatial Reuse (C-SR), etc.

In some embodiments, there may be one or more target APs. When there are multiple target APs, the second indication information can be set for each target AP. The second indication information can be a second field in the first frame; that is, in a case where there are multiple target APs, a second field corresponding to each target AP can be set. In the embodiment of the present disclosure, the second indication information corresponding to a target AP is used as an example for explanation.

In some embodiments, the second indication information includes at least one of a third subfield, a fourth subfield, and a fifth subfield.

The third subfield indicates the indication information of the target AP. The indication information of the target AP includes at least one of the Media Access Control Address (MAC address) of the target AP, the MAC address of the Access Point Multi-Link Device (AP MLD) to which the target AP belongs, and the Basic Service Set color (BSS color).

The fourth subfield includes a first indication bit and/or a second indication bit.

The first indication bit indicates whether a transmission start time exists.

The second indication bit indicates whether the first transmission duration is a shared transmission duration. The first transmission duration is a transmission duration allocated by the first AP 101 to the target AP based on the obtained Transmission Opportunity (TXOP). The shared transmission duration indicates that the first transmission duration is the same as a second transmission duration. The second transmission duration is a transmission duration allocated by the first AP 101 to other APs based on the TXOP.

The fifth subfield indicates the first transmission duration.

In some embodiments, the transmission duration can also be called the allocated time slot, the fifth subfield can also be called the allocated time slot subfield, and the first indication bit can be called the start time existence indication bit. The second indication bit can also be called the independent/shared time slot indication bit.

In some embodiments, the first indication bit can be set to different parameter values to indicate whether the first AP 101 allocates a transmission start time for the target AP.

In some embodiments, the second indication bit can be set to different parameter values to indicate whether the first transmission duration allocated by the first AP 101 to the target AP is a shared transmission duration.

Within the second indication information, the target AP can be another target AP besides the target AP indicated by the third subfield in the second indication information, or it can be a second AP that is not a target AP in the multi-AP coordination group to which the target AP belongs, or it can be any AP outside the multi-AP coordination group. For example, in a case where the multi-AP coordination group includes AP1, AP2, and AP3, and AP1 and AP2 are target APs, within the second indication information corresponding to AP1, other APs can be AP2, AP3, or AP4.

In the embodiment of the present disclosure, the indication information of the target information is indicated by a third subfield; a fourth subfield indicates whether the first transmission duration allocated by the first AP 101 to the target AP based on its obtained TXOP is a shared transmission duration, and whether the first AP 101 has allocated a transmission start time for the target AP based on its obtained TXOP; a fifth subfield indicates the first transmission duration allocated by the first AP 101 to the target AP based on its obtained TXOP; thus, the third AP 102 receiving the first frame can obtain specific multi-AP coordination information.

In some embodiments, the first indication bit is set to a third parameter value. The first indication bit indicates the existence of the transmission start time. The second indication information further includes a sixth subfield, where the sixth subfield indicates the transmission start time.

The first indication bit is set to a fourth parameter value, and the first indication bit indicates the absence of the transmission start time.

In some embodiments, the third parameter value can be "1", and the fourth parameter value can be "0". That is, when the first indication bit is set to "1", it indicates the existence of a transmission start time; when the first indication bit is set to "0", it indicates the absence of a transmission start time.

In the embodiment of the present disclosure, the presence or absence of a transmission start time can be determined based on the value of the first indication bit. Furthermore, in a case where the first indication bit indicates that no transmission start time exists, the sixth subfield does not need to be parsed, improving transmission efficiency. In a case where the first indication bit indicates that a transmission start time exists, multi-AP coordinated transmission can be performed with the first AP101 based on that transmission start time.

In some embodiments, the second indication bit is set to a fifth parameter value, and the second indication bit indicates that the first transmission duration is the shared transmission duration. The second indication information further includes a seventh subfield; where the seventh subfield indicates the spectrum parameter of the multi-AP coordinated transmission operation performed by the first AP with the target AP.

In some embodiments, the fifth parameter value can be "1". That is, when the second indication bit is set to "1", it indicates that the first transmission duration is the shared transmission duration.

In some embodiments, when the second indication bit is set to a sixth parameter value, the second indication bit indicates that the first transmission duration is not the shared transmission duration. For example, the sixth parameter value can be "0", that is, when the second indication bit is set to "0", it indicates that the first transmission duration is not the shared transmission duration.

In current M-APCO, a single time-division-based transmission opportunity sharing mechanism may result in some APs that do not obtain transmission opportunities being unable to access the network for a long time, affecting fairness among APs.

In the embodiment of the present disclosure, by setting the spectrum parameter for multi-AP coordinated transmission operations between the first AP and the target AP in a case where the first transmission duration corresponding to the target AP is a shared transmission duration, multiple APs (i.e., the target AP and other APs) that have obtained the same transmission opportunity can transmit within their corresponding time slots (i.e., the first transmission duration or the shared transmission duration) using strategies such as spectrum sharing, etc. (i.e., the spectrum parameter corresponding to each AP). This achieves hybrid transmission using multiple coordination strategies, improving spectrum resource utilization efficiency and fairness among APs.

In some embodiments, the first frame further includes third indication information. The third indication information indicates the Receiver Address (RA) of the first frame as a multicast address, and the multicast address includes the MAC address of the target AP.

In some embodiments, the third indication information can be a third field in the first frame.

In some embodiments, the first frame may further include a fourth field. The fourth field indicates the transmitter address (TA) of the first frame.

In the above embodiment, by setting the receiver address of the first frame to a multicast address, where the multicast address is the MAC address of the target AP, the first AP 101 can receive the frame sent by the target AP with the intention of joining multi-AP coordination scheduling through this multicast address. This improves the multi-AP coordination scheduling rate, increases the subsequent data transmission rate, and reduces transmission latency.

Step 203: The indication information of the third AP 102 receiving the first frame is matched with the indication information of the target AP. During a period from the transmission start time to the end of the first transmission duration, the first AP 101 performs a multi-AP coordinated transmission operation with the third AP 102.

In some embodiments, the third AP 102 can be any AP that receives the first frame.

In some embodiments, if the indication information of the third AP 102 matches the indication information of the target AP, the first AP 101 can perform the multi-AP coordinated transmission operation with the third AP 102 after the third AP 102 transmits a CTS frame (Clear To Send) to the first AP 101.

In some embodiments, if the indication information of the third AP 102 does not match the indication information of the target AP, the first AP 101 does not perform the multi-AP coordinated transmission operation with the third AP 102.

In the above embodiments, in a case where the indication information of the third AP 102 matches the indication information of the target AP in the first frame, the first AP 101 performs multi-AP coordinated transmission operations with the third AP 102 during the period from the transmission start time to the end of the first transmission duration. In a case where the indication information of the third AP 102 receiving the first frame does not match the indication information of the target AP, the first AP 101 does not perform multi-AP coordinated transmission operations with the third AP 102. That is, the AP that obtains a transmission opportunity transmits within the corresponding time period (i.e., from the transmission start time to the end of the first transmission duration), while the AP that does not obtain a transmission opportunity does not compete for access or transmit during this time, effectively avoiding contention and transmission interference.

In some embodiments, in a case where the third AP 102 determines that the second indication bit is set to the fifth parameter value, the third AP 102 performs a multi-AP coordinated transmission operation with the first AP 101 according to the spectrum parameter.

In the embodiment of the present disclosure, in a case where the third AP 102 determines that the first transmission duration is a shared transmission duration, it performs a multi-AP coordinated transmission operation with the first AP 101 based on the spectrum parameter allocated by the first AP 101 to the third AP 102 for performing multi-AP coordinated transmission operations. This avoids conflicts between the transmission processes of other APs with the same received transmission opportunity, which is the shared transmission duration, and the first AP 101 during the transmission between the third AP 102 and the first AP 101.

In some embodiments, in a case where the third AP 102 determines that the first indication bit is set to a third parameter value, it performs a multi-AP coordinated transmission operation with the first AP 101 during the period from the transmission start time to the end of the first transmission duration.

In a case where the third AP 102 determines that the first indication bit is set to a fourth parameter value, it performs a multi-AP coordinated transmission operation with the first AP 101 during the period from the time after a short interframe space (SFIS) to the end of the first transmission duration.

In some embodiments, in a case where the transmission start time is t1 and the first transmission duration is Δt, the time for performing the multi-AP coordinated transmission operation can be (tl, t1+Δt).

In some embodiments, in a case where the third AP 102 determines that the first indication bit is set to the third parameter value and the second indication bit is set to the fifth parameter value, it performs a multi-AP coordinated transmission operation with the first AP 101 during a period from the transmission start time to the end of the first transmission duration.

In a case where the third AP 102 determines that the first indication bit is set to the fourth parameter value and the second indication bit is set to the fifth parameter value, it performs a multi-AP coordinated transmission operation with the first AP 101 during the period from the time after a short interframe space (SFIS) to the end of the first transmission duration.

In the above embodiment, in a case where the third AP 102 determines that the first indication bit indicates the existence of a transmission start time, the third AP 102 performs a multi-AP coordinated transmission operation with the first AP 101 during the period from the transmission start time to the end of the first transmission duration. Thus, the multi-AP coordinated transmission operation can be performed according to the transmission start time and transmission duration allocated by the first AP 101 to the third AP 102.

In a case where the third AP102 determines that the first indication bit indicates that there is no transmission start time, the third AP 102 performs multi-AP coordinated transmission operation with the first AP 101 during the period from time after a short interframe space (SFIS) to the end of the first transmission duration. This separates frames belonging to a single session, effectively avoiding contention and transmission interference.

In some embodiments, the names of information, etc., are not limited to those described in the embodiments. Terms such as "information", "message", "signal", "signaling", "report", "configuration", "indication", "instruction", "command", "channel", "parameter", "domain", "field", "symbol", "bit", "data", "program", "chip", etc. can be used interchangeably.

In some embodiments, terms such as "moment", "time point", "time", "time position", etc. can be used interchangeably, as can terms such as "duration", "period", "time window", "window", "time", etc.

In some embodiments, terms such as wireless access scheme, waveform, etc. are interchangeable.

In some embodiments, terms such as "certain", "preset", "default", "set", "indicated", "particular", "any", "first", etc. are interchangeable. "Certain A", "preset A", "default A", "set A", "indicated A", "particular A", "any A", "first A", etc. can be interpreted as A pre-defined in a protocol, or A obtained through setting, configuration, or indication, or as specific A, a certain A, any A, or first A, but are not limited thereto.

In some embodiments, determination or judgment can be performed using a value represented by 1 bit (0 or 1), or by a true/false value (Boolean value), or by numerical comparison (e.g., comparison with a predetermined value), but are not limited thereto.

In some embodiments, "not expecting to receive" can be interpreted as not receiving on time-domain resource and/or frequency-domain resource, or as not performing subsequent processing on the received data, etc. after receiving data, etc.; "not expecting to transmit" can be interpreted as not transmitting, or as transmitting but not expecting a response from the receiver to the transmitted content.

The multi-AP coordination method involved in the embodiments of the present disclosure may include the foregoing steps and at least one of the embodiments. For example, step 201 may be implemented as an independent embodiment, and step 203 may be implemented as an independent embodiment; the combination of steps 201 and 202 may be implemented as an independent embodiment, but is not limited thereto.

In some embodiments, other example implementations described before or after the specification corresponding to FIG. 2 may be referred to.

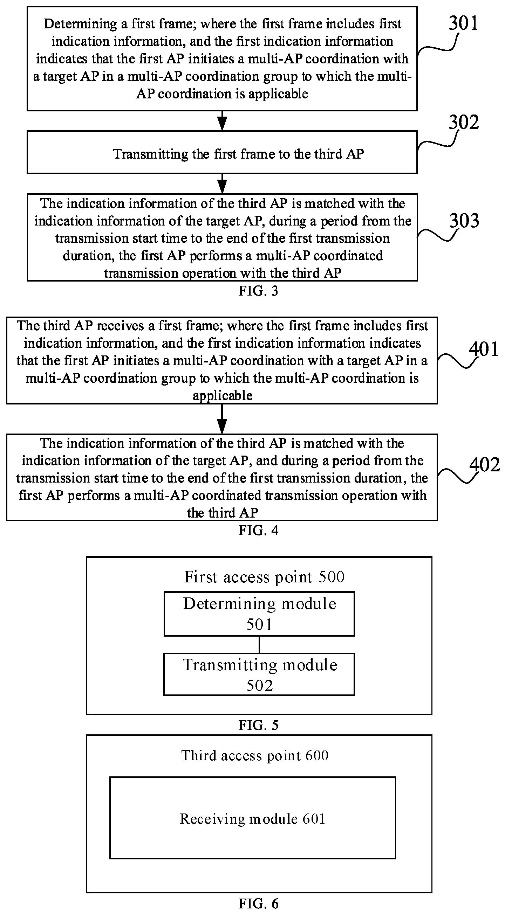

FIG. 3 is a schematic flowchart of a multi-AP coordination method according to an embodiment of the present disclosure.

As shown in FIG. 3, the above method can be applied to the first AP 101. The method includes:
Step 301: The first AP 101 determines a first frame; where the first frame includes first indication information. The first indication information indicates that the first AP 101 initiates a multi-AP coordination with a target AP in a multi-AP coordination group to which the multi-AP coordination is applicable.

Example implementations of step 301 can be found in the example implementations of step 201 in FIG. 2 and other related parts in the embodiments involved in FIG. 2, which will not be repeated here.

Step 302: The first AP 101 transmits the first frame to the third AP 102.

In some embodiments, the first indication information includes a first subfield and/or a second subfield.

The first subfield indicates the trigger type of the first frame; the first subfield is set to a first parameter value, indicating the first frame as a multi-AP coordination trigger frame.

The second subfield indicates a second AP included in the multi-AP coordination group (M-AP Coordination Group/Set). The indication bit corresponding to the second AP is set to a second parameter value, indicating the second AP as the target AP.

In some embodiments, the first frame further includes second indication information, and the second indication information indicates multi-AP coordination information.

In some embodiments, the second indication information includes at least one of a third subfield, a fourth subfield, and a fifth subfield.

The third subfield indicates the indication information of the target AP. The indication information of the target AP includes at least one of the Media Access Control Address (MAC address) of the target AP, the MAC address of the Access Point Multi-Link Device (AP MLD) to which the target AP belongs, and the Basic Service Set color (BSS color).

The fourth subfield includes a first indication bit and/or a second indication bit.

The first indication bit indicates whether a transmission start time exists.

The second indication bit indicates whether the first transmission duration is a shared transmission duration. The first transmission duration is a transmission duration allocated by the first AP 101 to the target AP based on the obtained Transmission Opportunity (TXOP). The shared transmission duration indicates that the first transmission duration is the same as a second transmission duration. The second transmission duration is a transmission duration allocated by the first AP 101 to other APs based on the TXOP.

The fifth subfield indicates the first transmission duration.

In some embodiments, the first indication bit is set to a third parameter value. The first indication bit indicates the existence of the transmission start time. The second indication information further includes a sixth subfield, where the sixth subfield indicates the transmission start time.

The first indication bit is set to a fourth parameter value, and the first indication bit indicates the absence of the transmission start time.

In some embodiments, the second indication bit is set to a fifth parameter value, and the second indication bit indicates that the first transmission duration is the shared transmission duration. The second indication information further includes a seventh subfield, where the seventh subfield indicates the spectrum parameter of the multi-AP coordinated transmission operation performed by the first AP with the target AP.

In some embodiments, the first frame further includes third indication information. The third indication information indicates the receiver address (RA) of the first frame as a multicast address, and the multicast address includes the MAC address of the targetAP.

Example implementations of step 302 can be found in the example implementations of step 202 in FIG. 2 and other related parts in the embodiments involved in FIG. 2, which will not be repeated here.

Step 303: The indication information of the third AP 102 receiving the first frame is matched with the indication information of the target AP. During a period from the transmission start time to the end of the first transmission duration, the first AP 101 performs a multi-AP coordinated transmission operation with the third AP 102.

In some embodiments, in a case where the third AP 102 determines that the second indication bit is set to the fifth parameter value, the third AP 102 performs a multi-AP coordinated transmission operation with the first AP 101 according to the spectrum parameter.

In some embodiments, in a case where the third AP 102 determines that the first indication bit is set to the third parameter value, it performs a multi-AP coordinated transmission operation with the first AP 101 during a period from the transmission start time to the end of the first transmission duration.

In a case where the third AP 102 determines that the first indication bit is set to the fourth parameter value, it performs a multi-AP coordinated transmission operation with the first AP 101 during the period from time after a short interframe space (SFIS) to the end of the first transmission duration.

Example implementations of step 303 can be found in the example implementations of step 302 in FIG. 2 and other related parts in the embodiments involved in FIG. 2, which will not be repeated here.

The multi-AP coordination method involved in the embodiments of the present disclosure may include the foregoing steps and at least one of the embodiments. For example, step 301 may be implemented as an independent embodiment, and step 303 may be implemented as an independent embodiment; the combination of steps 301 and 302 may be implemented as an independent embodiment, but is not limited thereto.

In some embodiments, other example implementations described before or after the specification corresponding to FIG. 3 may be referred to.

FIG. 4 is a second schematic flowchart of a multi-AP coordination method according to an embodiment of the present disclosure.

As shown in FIG. 4, the above method can be applied to a third AP 102, and the method includes:
Step 401, the third AP 102 receives a first frame sent by the first AP 101; where the first frame includes first indication information, and the first indication information indicates that the first AP 101 initiates multi-AP coordination with a target AP in a multi-AP coordination group to which the multi-AP coordination is applicable.

In some embodiments, the first indication information includes a first subfield and/or a second subfield.

The first subfield indicates the trigger type of the first frame; the first subfield is set to a first parameter value, indicating the first frame as a multi-AP coordination trigger frame.

The second subfield indicates a second AP included in the multi-AP coordination group (M-AP Coordination Group/Set). The indication bit corresponding to the second AP is set to a second parameter value, indicating the second AP as the target AP.

In some embodiments, the first frame further includes second indication information, the second indication information indicates multi-AP coordination information.

In some embodiments, the second indication information includes at least one of a third subfield, a fourth subfield, and a fifth subfield.

The third subfield indicates the indication information of the target AP. The indication information of the target AP includes at least one of the Media Access Control Address (MAC address) of the target AP, the MAC address of the Access Point Multi-Link Device (AP MLD) to which the target AP belongs, and the Basic Service Set color (BSS color).

The fourth subfield includes a first indication bit and/or a second indication bit.

The first indication bit indicates whether a transmission start time exists.

The second indication bit indicates whether the first transmission duration is a shared transmission duration. The first transmission duration is a transmission duration allocated by the first AP 101 to the target AP based on the obtained Transmission Opportunity (TXOP). The shared transmission duration indicates that the first transmission duration is the same as a second transmission duration. The second transmission duration is a transmission duration allocated by the first AP 101 to other APs based on the TXOP.

The fifth subfield indicates the first transmission duration.

In some embodiments, the first indication bit is set to a third parameter value. The first indication bit indicates the existence of the transmission start time. The second indication information further includes a sixth subfield, where the sixth subfield indicates the transmission start time.

In some embodiments, the second indication bit is set to a fifth parameter value, and the second indication bit indicates that the first transmission duration is the shared transmission duration. The second indication information further includes a seventh subfield, where the seventh subfield indicates the spectrum parameter of the multi-AP coordinated transmission operation performed by the first AP with the target AP.

In some embodiments, the first frame further includes third indication information. The third indication information indicates the receiver address (RA) of the first frame as a multicast address, and the multicast address includes the MAC address of the target AP.

In some embodiments, the third indication information can be a third field in the first frame.

In the above embodiments, by setting the receiver address of the first frame to a multicast address, where the multicast address is the MAC address of the target AP, the first AP 101 can receive the frame sent by the target AP with the intention of joining multi-AP coordinated scheduling through this multicast address. This improves the multi-AP coordinated scheduling rate, increases the subsequent data transmission rate, and reduces transmission latency.

Example implementations of step 401 can be found in the example implementations of steps 201 and 202 in FIG. 2, and other related parts in the embodiments shown in FIG. 2, which will not be repeated here.

Step 402: The indication information of the third AP 102 receiving the first frame is matched with the indication information of the target AP. During a period from the transmission start time to the end of the first transmission duration, the first AP 101 performs a multi-AP coordinated transmission operation with the third AP 102.

In some embodiments, in a case where the third AP 102 determines that the second indication bit is set to the fifth parameter value, the third AP 102 performs a multi-AP coordinated transmission operation with the first AP 101 according to the spectrum parameter.

In some embodiments, in a case where the third AP 102 determines that the first indication bit is set to the third parameter value, it performs a multi-AP coordinated transmission operation with the first AP 101 during the period from the transmission start time to the end of the first transmission duration.

In a case where the third AP 102 determines that the first indication bit is set to the fourth parameter value, it performs a multi-AP coordinated transmission operation with the first AP 101 during the period from time after a short interframe space (SFIS) to the end of the first transmission duration.

Example implementations of step 402 can be found in the example implementations of step 203 in FIG. 2 and other related parts in the embodiments shown in FIG. 2, which will not be repeated here.

The multi-AP coordination method involved in the embodiments of the present disclosure may include the foregoing steps and at least one of the embodiments. For example, step 401 may be implemented as an independent embodiment, and step 402 may be implemented as an independent embodiment, but is not limited thereto.

In some embodiments, other example implementations described before or after the specification corresponding to FIG. 4 may be referred to.

The embodiments of the present disclosure also provide a device for implementing any of the above methods. For example, a device is provided, which includes units or modules for implementing the steps performed by the terminal in any of the above methods. Another device is also provided, which includes units or modules for implementing the steps performed by the network device (e.g., the access network device, the core network functional node, the core network device, etc.) in any of the above methods.

It should be understood that the division of units or modules in the above device is only a logical functional division. In actual implementation, they can be fully or partially integrated into a single physical entity, or they can be physically separated. Furthermore, the units or modules in the device can be implemented in the form of a processor calling software: for example, the device includes a processor connected to a memory containing instructions, and the processor calls the instructions stored in the memory to implement any of the above methods or to implement the functions of the units or modules of the device. The processor is, for example, a general-purpose processor, such as a Central Processing Unit (CPU) or a microprocessor, and the memory is either internal or external to the device. Alternatively, the units or modules in the device can be implemented in the form of hardware circuits. The functions of some or all of the units or modules can be implemented through the design of the hardware circuits, which can be understood as one or more processors. For example, in one implementation, the hardware circuit is an application-specific integrated circuit (ASIC), and the functions of some or all of the units or modules are implemented through the design of the logical relationships between the components within the circuit. In another implementation, the hardware circuit can be implemented using a programmable logic device (PLD), such as a Field Programmable Gate Array (FPGA), which can include a large number of logic gates. The connection relationships between the logic gates are configured through a configuration file, thereby implementing the functions of some or all of the units or modules. All units or modules of the above-mentioned devices can be implemented entirely through processor-invoked software, entirely through hardware circuits, or partially through processor-invoked software with the remainder implemented through hardware circuits.

In the embodiments of the present disclosure, the processor is a circuit with signal processing capability. In one implementation, the processor can be a circuit with instruction read and execute capability, such as a Central Processing Unit (CPU), a microprocessor, a graphics processing unit (GPU) (which can be understood as a microprocessor), or a digital signal processor (DSP). In another implementation, the processor can implement certain functions through the logical relationships of hardware circuits. These logical relationships are fixed or reconfigurable. For example, the processor may be a hardware circuit implemented using an application-specific integrated circuit (ASIC) or a programmable logic device (PLD), such as an FPGA. In a reconfigurable hardware circuit, the process of the processor loading a configuration document and configuring the hardware circuit can be understood as the processor loading instructions to implement the functions of some or all of the above-mentioned units or modules. Furthermore, it can also be a hardware circuit designed for artificial intelligence, which can be understood as an ASIC, such as a Neural Network Processing Unit (NPU), a Tensor Processing Unit (TPU), or a Deep Learning Processing Unit (DPU).

FIG. 5 is a schematic diagram of a structure of the first AP provided in an embodiment of the present disclosure. As shown in FIG. 5, the first AP 500 may include at least one of a determining module 501 and a transmitting module 502.

In some embodiments, the determining module 501 is configured to determine a first frame; where the first frame includes first indication information, and the first indication information indicates that the first AP initiates a multi-AP coordination with a target AP in a multi-AP coordination group to which the multi-AP coordination is applicable; the transmitting module 502 is configured to transmit the first frame to a third AP.

In some embodiments, the determining module 501 is configured to perform at least one of the communication steps (e.g., steps 201, 203, 301, 303, 402, but not limited thereto) performed by the first AP 101 in any of the above methods, which will not be described in detail here. The transmitting module 502 is configured to perform at least one of the transmission and reception steps (e.g., steps 202, 302, but not limited thereto) performed by the first AP 101 in any of the above methods, which will not be described in detail here.

FIG. 6 is a schematic diagram of a structure of a third AP provided in an embodiment of the present disclosure. As shown in FIG. 6, the third AP 600 may include a receiving module 601.

In some embodiments, the receiving module 601 is configured to receive a first frame; where the first frame includes first indication information, and the first indication information indicates that the first AP 101 initiates a multi-AP coordination to a target AP in a multi-AP coordination group to which the multi-AP coordination is applicable.

In some embodiments, the receiving module 601 is configured to perform at least one of the transmission and reception steps (e.g., step 401, but not limited thereto) performed by the third AP 102 in any of the above methods, which will not be described in detail here.

The aforementioned third AP 600 may include a determining module, which is configured to perform at least one of the communication steps (such as steps 203, 302, and 402, but not limited thereto) performed by the third AP102 in any of the above methods, which will not be described in detail here.

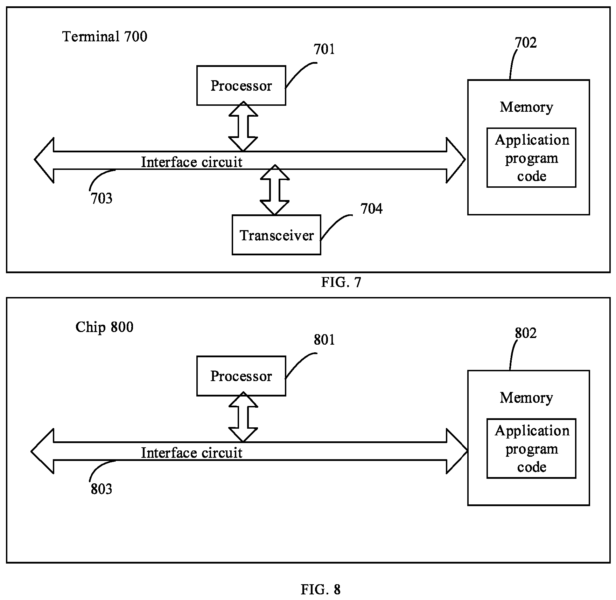

FIG. 7 is a schematic diagram of a structure of a terminal 700 (e.g., a user equipment) provided in an embodiment of the present disclosure. The terminal 700 may be a chip, chip system, or processor that supports a network device in implementing any of the above methods, or it may be a chip, chip system, or processor that supports a terminal in implementing any of the above methods. The terminal 700 can be configured to implement the methods described in the above method embodiments. For details, please refer to the descriptions in the above method embodiments.

As shown in FIG. 7, the terminal 700 includes one or more processors 701. The processor 701 may be a general-purpose processor or a dedicated processor, such as a baseband processor or a central processing unit (CPU). The baseband processor can be configured to process communication protocols and communication data, and the CPU can be configured to control communication devices (e.g., base stations, baseband chips, terminal devices, terminal device chips, DUs or CUs, etc.), execute programs, and process program data. The terminal 700 is configured to perform any of the above methods.

In some embodiments, the terminal 700 further includes one or more memories 702 for storing instructions. In some embodiments, all or part of the memories 702 may be located outside the terminal 700.

In some embodiments, the terminal 700 further includes one or more transceivers 704. When terminal 700 includes one or more transceivers 704, the transceiver 704 performs at least one of the communication steps (e.g., steps 202, 302, 401, but not limited thereto) in the above-described method, such as transmitting and/or receiving, while processor 701 performs at least one of other steps (e.g., steps 201, 203, 301, 303, 402, but not limited thereto).

In some embodiments, the transceiver may include a receiver and/or a transmitter, which may be separate or integrated. In some embodiments, the terms such as transceiver, transceiver unit, transceiver machine, transceiver circuit, etc., can be used interchangeably; the terms such as transmitter, transmitting unit, transmitter machine, transmitting circuit, etc., can be used interchangeably; and the terms such as receiver, receiving unit, receiver machine, receiving circuit, etc., can be used interchangeably.

In some embodiments, the terminal 700 may include one or more interface circuits 703. In some embodiments, the interface circuit 703 is connected to the memory 702, and the interface circuit 703 can be configured to receive signals from the memory 702 or other devices, and can be configured to transmit signals to the memory 702 or other devices. For example, the interface circuit 703 can read instructions stored in the memory 702 and transmit those instructions to the processor 701.

The terminal 700 described in the above embodiments can be a user equipment or other communication device, but the scope of the terminal 700 described in the present disclosure is not limited thereto, and the structure of the terminal 700 may not be limited to FIG. 7. The communication device can be an independent device or a part of a larger device. For example, the communication device can be: (1) an independent integrated circuit (IC), or chip, or chip system or subsystem; (2) a collection of one or more ICs, for example including storage components for storing data and programs; (3) an ASIC, such as a modem; (4) a module that can be embedded in other devices; (5) a receiver, terminal device, smart terminal device, cellular phone, wireless device, handheld device, mobile unit, vehicle-mounted device, network device, cloud device, artificial intelligence device, etc.; (6) others, etc.

FIG. 8 is a schematic diagram of a structure of a chip 800 provided in an embodiment of the present disclosure. For the case where terminal 1300 can be a chip or chip system, please refer to the schematic diagram of the structure of the chip 800 shown in FIG. 8, but it is not limited thereto.

The chip 800 includes one or more processors 801. The chip 800 is configured to perform any of the methods described above.

In some embodiments, the chip 800 further includes one or more processors 803. In some embodiments, the interface circuit 803 is connected to the memory 802. The interface circuit 803 can be configured to receive signals from the memory 802 or other devices, and the interface circuit 803 can be configured to transmit signals to the memory 802 or other devices. For example, the interface circuit 803 can read instructions stored in the memory 802 and transmit those instructions to the processor 801.

In some embodiments, the interface circuit 803 performs at least one of the communication steps such as transmitting and/or receiving, etc. (e.g., steps 202, 302, 401, but not limited thereto) in the methods described above, and the processor 801 performs at least one of other steps (e.g., steps 201, 203, 301, 303, 402, but not limited thereto).

In some embodiments, the terms such as the interface circuit, the interface, the transceiver pin, the transceiver, etc., can be used interchangeably.

In some embodiments, the chip 800 further includes one or more memories 802 for storing instructions. In some embodiments, all or part of the memory 802 may be located outside the chip 800.

The present disclosure also provides a storage medium storing instructions that, when executed on the terminal 700, cause the terminal 700 to perform any of the above methods. In some embodiments, the storage medium is an electronic storage medium. In some embodiments, the storage medium is a computer-readable storage medium, but not limited thereto. It may also be a storage medium readable by other devices. In some embodiments, the storage medium may be a non-transitory storage medium, but not limited thereto. It may also be a transitory storage medium.

The present disclosure also provides a program product that, when executed by the terminal 700, causes the terminal 700 to perform any of the above methods. In some embodiments, the program product is a computer program product.

The present disclosure also provides a computer program that, when executed on a computer, causes the computer to perform any of the above methods.

## Claims

1. A multi-AP coordination method, comprising:
determining, by a first access point AP, a first frame; wherein the first frame comprises first indication information, and the first indication information indicates that the first AP initiates a multi-AP coordination with a target AP in a multi-AP coordination group to which the multi-AP coordination is applicable; and
transmitting the first frame.

2. The multi-AP coordination method according to claim 1, wherein the first indication information comprises a first subfield and/or a second subfield;
wherein the first subfield indicates a trigger type of the first frame; the first subfield is set to a first parameter value, indicating the first frame as a multi-AP coordination trigger frame; and
the second subfield indicates a second AP comprised in the multi-AP coordination group; an indication bit corresponding to the second AP is set to a second parameter value, indicating the second AP as the target AP.

3. The multi-AP coordination method according to claim 1, wherein the first frame further comprises second indication information, and the second indication information indicates multi-AP coordination information.

4. The multi-AP coordination method according to claim 3, wherein the second indication information comprises at least one of a third subfield, a fourth subfield, and a fifth subfield;
wherein the third subfield indicates indication information of the target AP; the indication information of the target AP comprises at least one of a Media Access Control Address MAC address of the target AP, an MAC address of an Access Point Multi-Link Device AP MLD to which the target AP belongs, and a Basic Service Set Color BSS color;
the fourth subfield comprises a first indication bit and/or a second indication bit;
the first indication bit indicates whether a transmission start time exists;
the second indication bit indicates whether a first transmission duration is a shared transmission duration; the first transmission duration is a transmission duration allocated by the first AP to the target AP based on an obtained Transmission Opportunity TXOP; the shared transmission duration indicates that the first transmission duration is the same as a second transmission duration; the second transmission duration is a transmission duration allocated by the first AP to other APs based on the TXOP; and
the fifth subfield indicates the first transmission duration.

5. The multi-AP coordination method according to claim 4, wherein:
the first indication bit is set to a third parameter value, the first indication bit indicates existence of the transmission start time, and the second indication information further comprises a sixth sub-field; wherein the sixth sub-field indicates the transmission start time; and
the first indication bit is set to a fourth parameter value, and the first indication bit indicates absence of the transmission start time.

6. The multi-AP coordination method according to claim 5, further comprising:
in a case where the first indication bit is set to the third parameter value, during a period from the transmission start time to the end of the first transmission duration, performing, by the first AP, a multi-AP coordinated transmission operation with the target AP; and
in a case where the first indication bit is set to the fourth parameter value, during a period from time after a short interframe space SFIS to the end of the first transmission duration, performing, by the first AP, the multi-AP coordinated transmission operation with the target AP.

7. The multi-AP coordination method according to claim 4, wherein:
the second indication bit is set to a fifth parameter value, the second indication bit indicates the first transmission duration as the shared transmission duration, and the second indication information further comprises a seventh sub-field; wherein the seventh sub-field indicates a spectrum parameter for the first AP performing a multi-AP coordinated transmission operation with the target AP.

8. The multi-AP coordination method according to claim 7, further comprising:
in a case where the second indication bit is set to the fifth parameter value, performing, by the first AP, the multi-AP coordinated transmission operation with the target AP according to the spectrum parameter.

9. The multi-AP coordination method according to any one of claims 4 to 8, wherein:
indication information of a third AP receiving the first frame matches the indication information of the target AP, and a multi-AP coordinated transmission operation is performed with the third AP during a period from the transmission start time to the end of the first transmission duration.

10. The multi-AP coordination method according to claim 1, wherein the first frame further comprises third indication information, the third indication information indicates a receiver address of the first frame as a multicast address, and the multicast address comprises an MAC address of the target AP.

11. A multi-AP coordination method, comprising:
receiving, by a third access point AP, a first frame; wherein the first frame comprises first indication information, and the first indication information indicates that a first AP initiates a multi-AP coordination to a target AP in a multi-AP coordination group to which the multi-AP coordination is applicable.

12. The multi-AP coordination method according to claim 11, wherein the first indication information comprises a first subfield and/or a second subfield;
wherein the first subfield indicates a trigger type of the first frame; the first subfield is set to a first parameter value, indicating the first frame as a multi-AP coordination trigger frame; and
the second subfield indicates a second AP comprised in the multi-AP coordination group; an indication bit corresponding to the second AP is set to a second parameter value, indicating the second AP as the target AP.

13. The multi-AP coordination method according to claim 11, wherein the first frame further comprises second indication information, and the second indication information indicates multi-AP coordination information.

14. The multi-AP coordination method according to claim 13, wherein the second indication information comprises at least one of a third subfield, a fourth subfield, and a fifth subfield;
wherein the third subfield indicates indication information of the target AP; the indication information of the target AP comprises at least one of a Media Access Control Address MAC address of the target AP, an MAC address of an Access Point Multi-Link Device AP MLD to which the target AP belongs, and a Basic Service Set Color BSS color;
the fourth subfield comprises a first indication bit and/or a second indication bit;
the first indication bit indicates whether a transmission start time exists;
the second indication bit indicates whether a first transmission duration is a shared transmission duration; the first transmission duration is a transmission duration allocated by the first AP to the target AP based on an obtained Transmission Opportunity TXOP; the shared transmission duration indicates that the first transmission duration is the same as a second transmission duration; the second transmission duration is a transmission duration allocated by the first AP to other APs based on the TXOP; and
the fifth subfield indicates the first transmission duration.

15. The multi-AP coordination method according to claim 14, wherein:
the first indication bit is set to a third parameter value, the first indication bit indicates existence of the transmission start time, and the second indication information further comprises a sixth sub-field; wherein the sixth sub-field indicates the transmission start time; and
the first indication bit is set to a fourth parameter value, and the first indication bit indicates absence of the transmission start time.

16. The multi-AP coordination method according to claim 15, further comprising:
in a case where the first indication bit is set to the third parameter value, during a period from the transmission start time to the end of the first transmission duration, performing, by the first AP, a multi-AP coordinated transmission operation with the target AP; and
in a case where the first indication bit is set to the fourth parameter value, during a period from time after a short interframe space SFIS to the end of the first transmission duration, performing, by the first AP, the multi-AP coordinated transmission operation with the target AP.

17. The multi-AP coordination method according to claim 14, wherein:
the second indication bit is set to a fifth parameter value, the second indication bit indicates the first transmission duration as the shared transmission duration, and the second indication information further comprises a seventh sub-field; wherein the seventh sub-field indicates a spectrum parameter for the first AP performing a multi-AP coordinated transmission operation with the target AP.

18. The multi-AP coordination method according to claim 17, further comprising:
in a case where the second indication bit is set to the fifth parameter value, performing, by the first AP, the multi-AP coordinated transmission operation with the target AP according to the spectrum parameter.

19. The multi-AP coordination method according to any one of claims 14 to 18, wherein:
indication information of a third AP matches the indication information of the target AP, and the first AP performs a multi-AP coordinated transmission operation with the third AP during a period from the transmission start time to the end of the first transmission duration.

20. The multi-AP coordination method according to claim 11, wherein the first frame further comprises third indication information, the third indication information indicates a receiver address of the first frame as a multicast address, and the multicast address comprises an MAC address of the target AP.

21. An access point, wherein the access point AP is a first AP, and the first AP comprises:
a determining module, configured to determine a first frame; the first frame comprises first indication information, the first indication information indicates that the first AP initiates a multi-AP coordination with a target AP in a multi-AP coordination group to which the multi-AP coordination is applicable; and
a transmitting module, configured to transmit the first frame.

22. An access point, wherein the access point AP is a third AP, and the third AP comprises:
a receiving module, configured to receive a first frame; the first frame comprises first indication information, the first indication information indicates that the first AP initiates a multi-AP coordination with a target AP in a multi-AP coordination group to which the multi-AP coordination is applicable.

23. An access point, wherein the access point AP is a first AP, and the first AP comprises:
one or more processors;
wherein the first AP is configured to perform the multi-AP coordination method according to any one of claims 1 to 10.

24. An access point, wherein the access point AP is a third AP, and the third AP comprises:
one or more processors;
wherein the second AP is configured to perform the multi-AP coordination method according to any one of claims 11 to 20.
